# FASCICULE DE BREVET EUROPEEN

(11) **EP 3 576 879 B1**
(45) Date de publication et mention de la délivrance du brevet: **04.11.2020**
(21) Numéro de dépôt: 18708162.5
(22) Date de dépôt: 01.02.2018
(51) Int. Cl.: B01L 3/02, B65D 47/18, B65D 51/18, B65D 47/20, B01L 3/00, B05B 11/00, F16K 23/00

(54) **DISTRIBUTEUR COMPTE-GOUTTES.**
TROPFSPENDER
DROPPER DISPENSER

(30) Priorité: 02.02.2017 FR 1750855
(43) Date de publication de la demande: 11.12.2019
(73) Titulaire: APTAR France SAS, 27110 Le Neubourg (FR)
(72) Inventeur: DUQUET, Frédéric, 78121 Crespières (FR)
(74) Mandataire: CAPRI
(86) Numéro de dépôt international: PCT/FR2018/050235
(87) Numéro de publication internationale: WO 2018/142074

(56) Documents cités:
- DE-U1-202016 102 192
- US-A1- 2008 035 677
- US-A1- 2008 237 278
- US-A1- 2015 114 475

## Description

La présente invention concerne un distributeur du type compte-gouttes permettant de distribuer un produit fluide sous forme de gouttes. Les gouttes sont distribuées les unes à la suite des autres. Chaque goutte tombe du distributeur par gravité sur une surface d'application souhaitée. Les domaines d'application privilégiés de la présente invention sont ceux de la parfumerie, de la cosmétique ou encore de la pharmacie, sans oublier l'alimentaire.

Dans l'art antérieur, on connaît déjà le document DE202016102192U1 qui permet de distribuer des gouttes, une à une, en écrasant un réservoir déformable pourvu d'une valve et d'une canule. Pour distribuer une goutte, l'utilisateur saisit le réservoir et le retourne : le produit fluide qu'il contient est maintenu dans le réservoir grâce à la valve qui est fermée au repos. Lorsque l'utilisateur écrase le réservoir, le produit fluide qu'il contient est mis sous pression, ce qui a pour effet d'ouvrir la valve. Le produit fluide peut alors s'écouler à travers la canule qui, à son extrémité libre, est conçue pour former une goutte de produit fluide qui se détachera de la canule par gravité. Lorsque la goutte est déposée sur la surface d'application souhaitée, l'utilisateur peut relâcher sa pression sur le réservoir et le retourner, de sorte que le produit fluide qui remplit la canule est aspiré dans le réservoir à travers la valve qui est forcée à l'état ouvert. Lorsque la canule est vidée, de l'air est ensuite aspiré dans le réservoir à travers la canule et la valve. Le réservoir a alors repris sa forme initiale. La valve de ce document est une valve bidirectionnelle qui comprend une fente auto-jointante en forme de croix, définie par quatre volets souples adjacents. Au repos, la fente cruciforme est fermée de manière étanche. Lors de la distribution de produit fluide, la valve s'ouvre en définissant un passage en forme de croix ou d'étoile entre les volets souples. Lors de la phase d'aspiration, il en est de même, hormis que les volets sont déformés dans l'autre sens. De ce fait, la section de passage est pratiquement la même dans la phase de distribution que dans la phase d'aspiration. Il faut également noter que la section de passage de la valve, lors de la phase de distribution, est directement proportionnelle à la force d'écrasement exercée par l'utilisateur sur le réservoir. Le document US2008/035677 décrit un distributeur à dôme ayant un ensemble de valve de sortie comprenant une valve à fente. Dans les modes de réalisation, l'ensemble de valve comprend en outre un élément de résistance à l'éventation qui empêche l'air extérieur de passer à travers la valve à fente en la maintenant à l'état fermé.

Le problème avec ce type de distributeur est le suivant : pour assurer une aspiration suffisante, il faut un minimum de perte de charge à travers la valve, et pour ce faire, il faut que la valve puisse s'ouvrir largement pour définir une section de passage importante. Cependant, si la valve s'ouvre largement lors de la phase d'aspiration, elle s'ouvre tout aussi largement lors de la phase de distribution, ce qui conduit à un passage massif de produit fluide à travers la canule. Il est ainsi difficile de former des gouttes distinctes : on obtient plutôt un petit jet continu, qui est d'autant plus puissant que l'on écrase fortement le réservoir.

Une solution qui semble évidente serait de réduire la section de passage de la valve pour avoir une perte de charge importante à travers la valve et ainsi garantir la distribution de gouttes distinctes. Cependant, cela pose un problème au niveau de la phase d'aspiration, car la perte de charge importante à travers la valve empêche le réservoir de reprendre sa forme initiale de repos.

La présente invention a pour but de surmonter l'inconvénient précité de l'art antérieur en définissant un distributeur à valve qui d'une part garantit une distribution de gouttes distinctes et d'autre part permet au réservoir de reprendre sa forme initiale de repos. Un autre but de la présente invention peut être défini comme la recherche d'une asymétrie de fonctionnement de la valve. Encore un autre but de la présente invention est de partir du distributeur du document DE202016102192U1 sans lui apporter de profondes modifications.

Pour atteindre ces buts, la présente invention propose un distributeur compte-gouttes comprenant un réservoir de produit fluide comprenant au moins une paroi mobile pour mettre le produit fluide sous pression dans le réservoir, une canule ayant une entrée alimentée en produit fluide et une sortie conçue pour former une goutte de produit fluide, une valve disposée entre le réservoir de produit fluide et la canule pour contrôler d'une part le passage de produit fluide du réservoir vers la canule et d'autre part le passage de produit fluide et éventuellement d'air de la canule vers le réservoir, la valve restant fermée en l'absence de pression suffisante de produit fluide, la valve, soumise à une pression suffisante du produit fluide en provenance du réservoir, définissant une ouverture dont la section de passage est proportionnelle à la force exercée sur la paroi mobile du réservoir, caractérisé en ce qu'il comprend en outre un limiteur d'ouverture de valve pour limiter l'ouverture de la valve lors du passage de produit fluide du réservoir vers la canule, afin de créer une perte de charge supplémentaire qui réduit le passage de produit fluide à travers la canule.

Ainsi, grâce à ce limitateur d'ouverture de valve, la valve ne se comporte plus de la même manière en phase de distribution et en phase d'aspiration. En effet, la valve peut s'ouvrir librement et largement lors des phases d'aspiration, alors que son ouverture sera limitée par le limitateur d'ouverture de valve lors des phases de distribution. Au niveau de l'utilisation, cela se ressent de la manière suivante : l'utilisateur devra appuyer fortement sur la paroi mobile du réservoir pour faire passer du produit fluide à travers la valve dont l'ouverture est limitée, ce qui permet de garantir la formation de gouttes distinctes. Toutefois, dès que l'utilisateur relâche sa pression sur le réservoir, le produit fluide présent dans la canule va être rapidement aspiré à l'intérieur du réservoir à travers la valve qui s'ouvre librement et largement. En d'autres termes, la valve avec son limitateur d'ouverture engendre une perte de charge bien plus grande lors des phases de distribution que lors des phases d'aspiration.

Selon une caractéristique avantageuse de l'invention, le limiteur d'ouverture de valve comprend une zone de butée contre laquelle la valve vient en butée lors du passage de produit fluide du réservoir vers la canule. En d'autres termes, la valve ne peut s'ouvrir que de manière limitée lors des phases de distribution. Sa course est tronquée du fait de sa mise en butée contre le limitateur d'ouverture.

Selon un autre aspect intéressant de l'invention, le limiteur d'ouverture de valve peut être situé au niveau de l'entrée de la canule. On peut ainsi dire que la valve avec son limiteur d'ouverture contrôle directement l'alimentation de la canule.

Selon un mode de réalisation avantageux, le limiteur d'ouverture de valve est formé de manière monobloc avec la canule. Avantageusement, la butée de la valve contre le limiteur crée un contact annulaire étanche autour de l'entrée de la canule. Ce mode de réalisation est avantageux, car il n'engendre pas de pièces supplémentaires. En effet, c'est la canule elle-même qui forme le limiteur au niveau de son entrée. Un contact annulaire étanche autour de l'entrée est avantageux, car il empêche le produit fluide de se répandre autour de la valve.

Selon un autre mode de réalisation, le limiteur d'ouverture de valve peut être formé par une pièce distincte interposée entre la valve et la canule.

Selon un autre aspect avantageux de l'invention, le limiteur d'ouverture de valve forme une restriction de section de passage vers la canule. Ainsi, en plus de limiter la section de passage de l'ouverture de la valve, le limiteur de l'ouverture peut lui-même réduire la section de passage vers la canule.

Selon un aspect intéressant de l'invention, le distributeur peut également comprendre des moyens de réglage pour ajuster le positionnement du limiteur d'ouverture de valve par rapport à la valve. Ainsi, l'utilisateur peut régler à sa guise le degré d'ouverture de la valve. Par exemple, il peut ajuster le positionnement du limitateur d'ouverture en fonction de la force maximale qu'il peut exercer pour écraser le réservoir.

Selon un mode de réalisation pratique, la valve comprend une paroi mobile déformable qui est percée par une fente cruciforme définissant des volets souples adjacents, cette paroi mobile déformable venant en butée contre le limiteur d'ouverture de valve, au moins une partie des volets souples venant avantageusement en butant contre le limiteur d'ouverture de valve. Avantageusement, la valve comprend en outre une couronne d'ancrage montée fixement par rapport au réservoir et une membrane souple annulaire qui relie la couronne d'ancrage à la paroi mobile déformable, de sorte que la paroi mobile déformable se déplace par rapport à la couronne d'ancrage par déformation de la membrane souple annulaire sous l'effet du passage de produit fluide dans un sens ou dans l'autre. Cette valve est sensiblement similaire, voire identique, à celle du document DE202016102192U1 précité.

Selon un autre aspect avantageux de l'invention, la valve présente deux sections de passage distinctes, à savoir une première section de passage de distribution lors du passage de produit fluide du réservoir vers la canule et une seconde section de passage d'aspiration lors du passage de produit fluide et éventuellement d'air de la canule vers le réservoir, la première section de passage de distribution étant limitée par le limiteur d'ouverture de valve de telle sorte qu'elle est inférieure à la seconde section de passage d'aspiration. Avantageusement, la première section de passage de distribution est 3 à 4 fois plus petite que la seconde section de passage d'aspiration. Ainsi, la présente invention peut également être mise en œuvre sous la forme d'une valve bidirectionnelle à section de passage asymétrique du fait de la mise en œuvre d'une caractéristique ayant pour fonction ou pour conséquence de limiter la section de passage dans un sens, et pas dans l'autre.

L'esprit de l'invention est de différencier les sections de passage d'une valve bidirectionnelle en mettant en œuvre un limitateur d'ouverture de valve qui n'opère que dans un sens d'écoulement. Cette valve bidirectionnelle asymétrique trouve une application privilégiée dans un distributeur compte-gouttes, puisqu'elle permet un écoulement lent ou contrôlé pour la formation des gouttes et un écoulement rapide et puissant pour vider la canule de son contenu par aspiration. Une telle valve bidirectionnelle asymétrique peut être mise en œuvre dans d'autres dispositifs et une protection individuelle de cette valve pourra être recherchée.

L'invention sera maintenant décrite plus en détail en référence aux dessins joints, donnant à titre d'exemples non limitatifs, plusieurs modes de réalisation de l'invention.

Sur les figures :
La figure 1 est une vue en coupe transversale verticale à travers un distributeur compte-gouttes selon un premier mode de réalisation de l'invention à l'état de repos,
La figure 2 est une vue agrandie du détail entouré de la figure 1,
La figure 3 est une vue similaire à la figure 2 lors d'une phase de distribution de produit fluide,
La figure 4 est une vue similaire aux figures 2 et 3 lors d'une phase d'aspiration de produit fluide,
La figure 5 est une vue similaire aux figures 2 à 4 pour un distributeur de l'art antérieur dépourvu de limitateur d'ouverture de valve,
La figure 6 est une vue similaire aux figures 2 à 5 pour un second mode de réalisation de l'invention,
La figure 7 est une vue similaire aux figures 2 à 6 pour un troisième mode de réalisation de l'invention, et
La figure 8 est une vue similaire à la figure 2 pour un quatrième mode de réalisation de l'invention.

Quelle que soit le mode de réalisation, le distributeur compte-gouttes de l'invention comprend les éléments constitutifs suivants, à savoir un réservoir de produit fluide, une tête de distribution, une valve bidirectionnelle, et optionnellement un capot de protection. En outre, une douille de support peut être mise en œuvre pour le maintien de la valve.

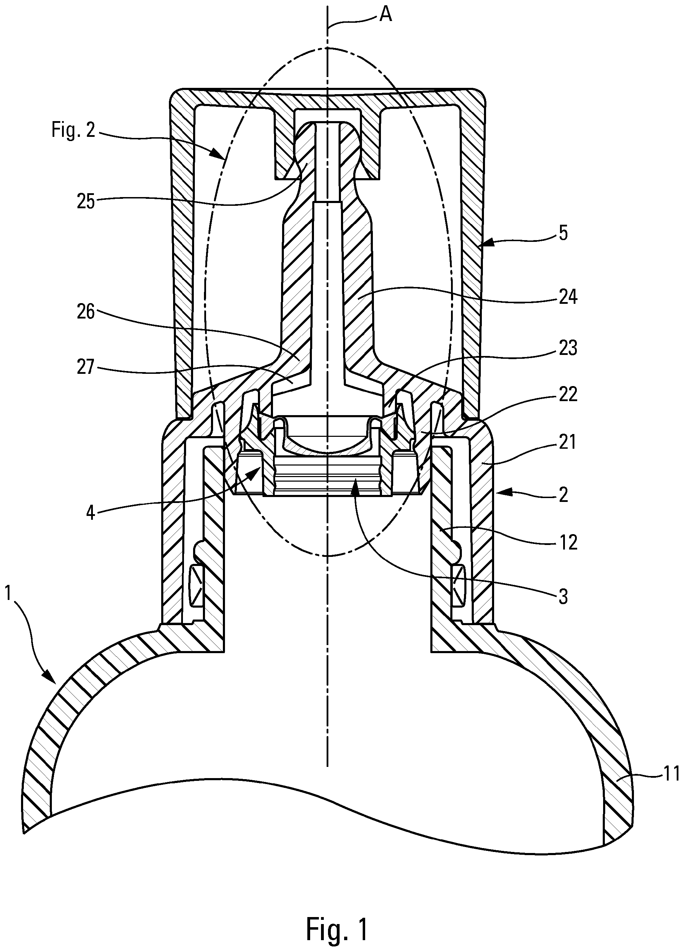

En se référant à la figure 1, on peut voir le réservoir de produit fluide 1 de manière tronquée. On peut tout de même observer que le réservoir 1 comprend une paroi 11 et un col 12. Dans ce mode de réalisation, la paroi 11 est mobile, de manière à pouvoir être déformée par une pression suffisante exercée par l'utilisateur. On peut parler de réservoir écrasable, plus connu sous le terme de « Squeeze bottle ». Ce type de réservoir à paroi déformable peut être réalisé par exemple par injection/soufflage de matière plastique appropriée.

A la place de ce récipient à paroi écrasable, on peut également mettre en œuvre un réservoir dont la paroi mobile est formée par un piston qui coulisse dans un fût de coulissement approprié. Ainsi, en poussant le piston dans le fût, le produit fluide contenu dans le réservoir est mis sous pression.

A vrai dire, le type particulier de réservoir n'est pas critique pour la présente invention, dans la mesure où il comprend une paroi mobile permettant de mettre le contenu du réservoir sous pression.

On se référera maintenant aux figures 1 à 4 pour décrire en détail une tête de distribution 2 selon un premier mode de réalisation de l'invention. Toutefois, l'architecture globale de la tête de distribution se retrouve dans les autres modes de réalisation qui seront décrits ci-après. C'est pourquoi seules les différences par rapport au premier mode de réalisation seront décrites.

La tête de distribution 2 comprend une jupe de fixation 21 susceptible de venir en prise avec le col 12 du réservoir 1 pour réaliser une fixation stable, et éventuellement définitive. La tête de distribution 2 comprend également une lèvre d'étanchéité et de montage 22, qui s'étend concentriquement à l'intérieur de la jupe 21 de manière à venir en prise étanche avec l'intérieur du col 12. Une étanchéité est ainsi réalisée entre le réservoir 1 et la tête de distribution 2. La tête de distribution 2 comprend également une bride annulaire de maintien 23 qui s'étend concentriquement à l'intérieur de la lèvre 22. Enfin, la tête de distribution 2 comprend une canule 24 qui s'étend vers le haut, à l'opposé de la jupe 21, de la lèvre 22 et de la bride 23. La canule 24 comprend un passage intérieur qui la traverse de part en part. La canule comprend une sortie 25, formée au niveau de son extrémité libre supérieure, qui est conçue pour former une goutte de produit fluide. En effet, on peut remarquer que cette sortie 25 présente une forme extérieure arrondie de manière à lui conférer une forme sensiblement sphérique. Il s'agit là d'une conception conventionnelle pour un embout de distribution de gouttes au sein d'un distributeur compte-gouttes. La canule 24 comprend également une entrée 26 qui est adjacente à la bride annulaire 23. On peut remarquer que l'entrée 26 est pourvue de plusieurs ailettes ou nervures radiales 27, qui s'étendent en étoile tout autour de l'intérieur creux de la canule 24. Ces nervures ou ailettes 27 sont formées juste en-dessous de l'entrée 26 et s'étendent jusqu'au contact de la bride annulaire 23. On peut noter que ces nervures ou ailettes 27 ne réduisent pas la section de passage du passage intérieur de la canule 24. Ces ailettes ou nervures 27 peuvent être considérées comme des extensions vers le bas de l'entrée 26 de la canule 24. On verra ci-après quelle est la fonction de ces nervures ou ailettes 27.

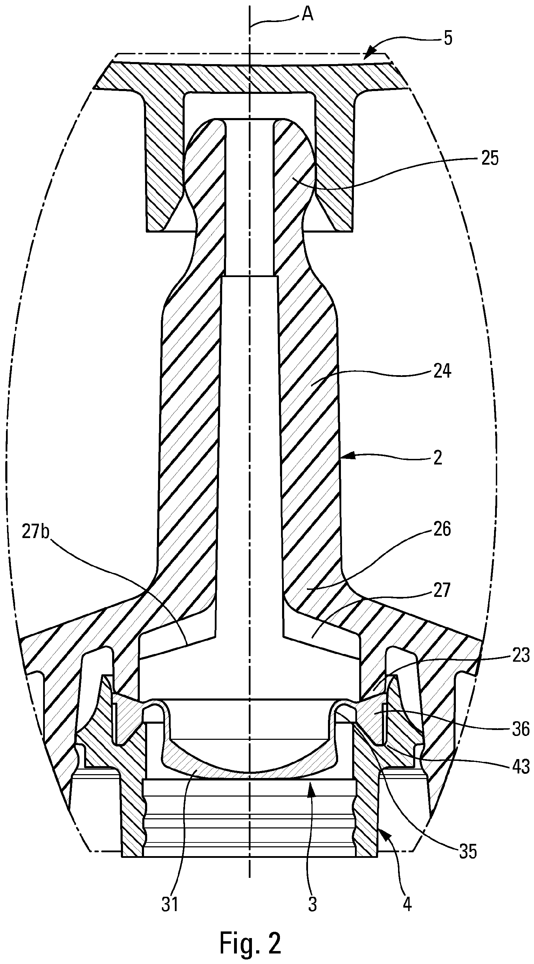

La valve 3 pourrait être directement fixée à la tête de distribution 2, au niveau de sa bride annulaire 23, ou encore au niveau de sa lèvre d'étanchéité 22. Cependant, dans ce mode de réalisation particulier, le distributeur compte-gouttes met en œuvre une douille de support 4 qui est encliquetée à l'intérieur de la lèvre d'étanchéité 22 et qui comprend un logement annulaire de réception 43 apte à recevoir une partie de la valve 3 de manière à la presser fortement contre l'extrémité libre inférieure de la bride annulaire de maintien 23. Ceci est plus clairement visible sur la figure 2. Bien entendu, il est possible d'envisager d'autres moyens et d'autres techniques pour maintenir la valve 3 à l'intérieur de la tête de distribution 2 : la douille de support 4 ne constituant qu'un exemple illustratif.

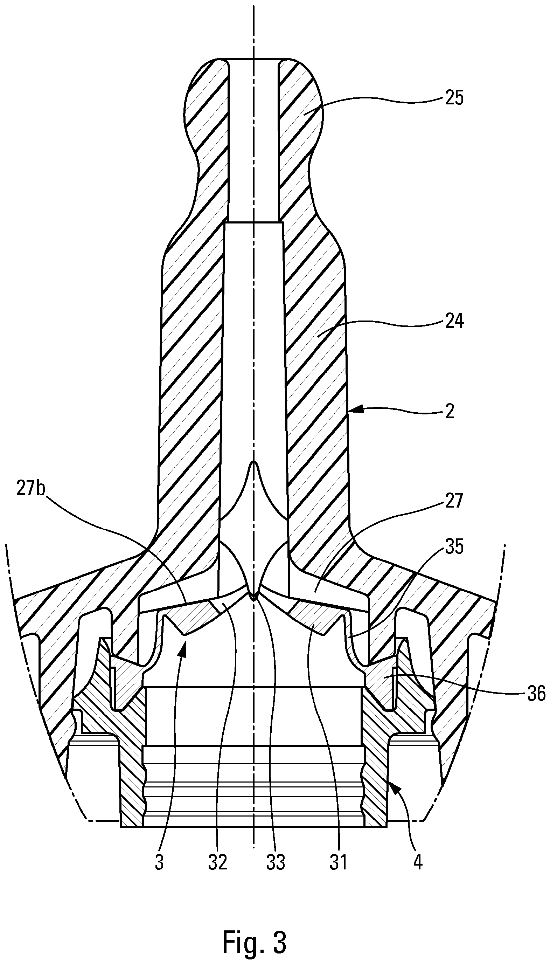

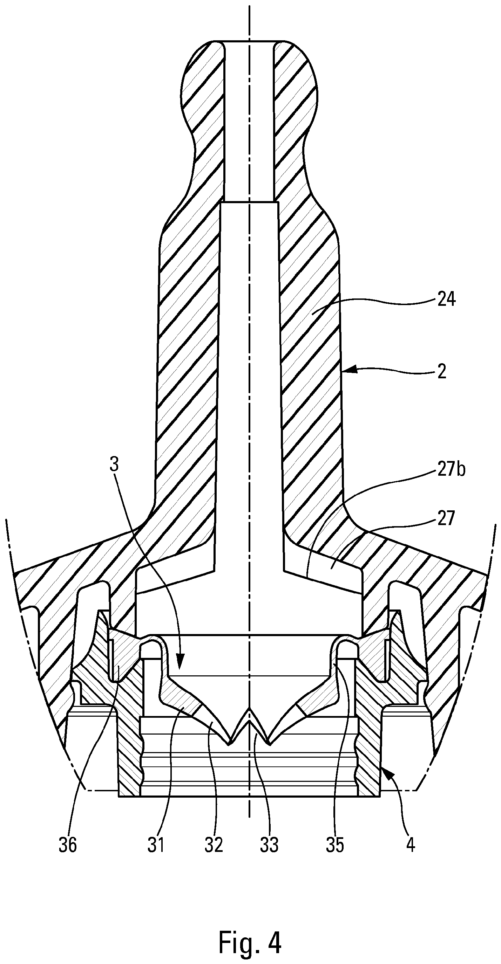

La valve 3 qui est mise en œuvre dans ce distributeur compte-gouttes de l'invention ne doit pas être considérée comme limitatif. D'autres types de valve peuvent être utilisés dans le cadre de l'invention. Cependant, dans ce mode de réalisation particulier et privilégié, la valve 3 comprend une paroi mobile déformable 31 qui présente, au repos, une forme concave de cuvette. On peut remarquer que l'épaisseur de la paroi mobile déformable 31 n'est pas constante, puisqu'elle est plus mince au centre que sur les bords. Cette paroi mobile déformable 31 est percée par une fente 33 qui est ici cruciforme. Ceci est plus visible sur les figures 3 et 4. La fente 33 est définie par quatre volets souples adjacents 32 qui forment chacun un quart de camembert. Au repos, comme représenté sur la figure 2, les quatre volets souples adjacents 32 sont parfaitement jointifs, de sorte que la fente cruciforme 33 est parfaitement fermée et même invisible. En revanche, lorsque cette paroi mobile déformable 31 est soumise à un produit fluide sous une pression suffisante, les quatre volets souples adjacents s'écartent pour définir une ouverture 33 en forme de croix ou d'étoile à quatre branches. Ceci est représenté de manière schématique sur les figures 3 et 4. On peut ainsi dire que l'ouverture de la valve 3 est formée par la fente cruciforme 33 qui est plus ou moins ouverte.

La valve 3 comprend également une couronne d'ancrage 36 qui est en place dans le logement annulaire de réception 43 de la douille de montage 4 et comprimée par la bride annulaire de maintien 23. On peut aussi dire que la couronne d'ancrage 36 est coincée entre la douille 4 et la bride 23. On crée ainsi une fixation et une étanchéité suffisante. D'autre part, la paroi mobile 31 est reliée à la couronne d'ancrage 36 par une membrane souple annulaire 35 présentant une épaisseur réduite. Ainsi, la paroi mobile déformable 31 peut se déplacer entre une position de distribution représentée sur la figure 3 et une position d'aspiration représentée sur la figure 4. On peut observer que la membrane annulaire déformable 35 s'étend vers le haut à partir de la couronne d'ancrage 36 sur la figure 3, alors que cette même membrane 35 est repliée ou retroussée vers le bas sur la figure 4. On peut ainsi dire que la membrane annulaire 35 est retroussable vers le haut à partir de sa position de repos (figure 2) pour atteindre sa position de distribution (figure 3). Ensuite, la membrane peut regagner sa position de repos dans laquelle la paroi mobile déformable 31 peut être déformée, comme représenté sur la figure 4, lors d'une phase d'aspiration de produit fluide.

Il va maintenant être décrit un cycle complet de fonctionnement de ce distributeur compte-gouttes à partir des figures 2, 3 et 4. Sur la figure 2, la valve 3 est dans sa position de repos, avec ses volets 32 jointifs et sa fente cruciforme parfaitement fermée. La paroi 31 donne alors l'impression de ne pas être percée. Elle est parfaitement étanche. Ainsi, le produit fluide stocké dans le réservoir 1 est isolé de l'extérieur par la valve 3, dans son état fermé. On peut également remarquer que la valve 3 est hors de contact des nervures ou ailettes 27 formées au niveau de l'entrée 26 de la canule 24.

Lorsqu'un utilisateur veut se servir du distributeur, il commence par retirer le capot de protection 5, de manière à dégager ou démasquer la tête de distribution 2, et plus particulièrement sa canule 24. Il peut saisir le distributeur par le réservoir 1, sans toutefois encore écraser sa paroi mobile 11. Il retourne ensuite le distributeur de manière à ce que la sortie 25 de la canule 24 soit orientée sensiblement vers le bas. Le produit fluide contenu dans le réservoir 1 vient alors en contact de la valve 3, mais comme celle-ci est fermée, elle empêche tout écoulement de produit fluide à travers la canule 24. A cet instant, l'utilisateur peut écraser la paroi mobile 11 du réservoir 1 de manière à mettre le produit fluide qu'il contient sous pression. Dans un premier temps, la paroi mobile déformable 31 va se déplacer vers le haut par déformation de la membrane souple 35. La fente cruciforme 33 reste encore fermée. Le déplacement de la paroi déformable 31 se poursuit jusqu'à ce qu'elle vienne en butée contre une zone de butée 27b, qui est ici formée par les arêtes inférieures des nervures ou ailettes 27. La fente 33 est encore fermée. En appuyant plus fortement sur la paroi mobile 11, la pression du produit fluide sur la paroi 31 va augmenter jusqu'à la déformer en séparant les volets souples 32 de manière à définir entre eux une ouverture 33 sous la forme d'une fente cruciforme ou en étoile à quatre branches. Etant donné que la paroi 31, et même une partie des volets souples 32 sont poussés en butée contre la zone de butée 27b des ailettes 27, l'ouverture de la valve 3 est restreinte ou limitée, créant ainsi une perte de charge accrue. En d'autres termes, les nervures ou ailettes 27 remplissent une fonction de limiteur d'ouverture de la valve 3 en empêchant un écartement plus important des volets souples 32. Ainsi, une faible quantité de produit fluide est refoulée à travers l'intérieur creux de la canule 24, de sorte que la formation de gouttes distinctes est plus facilement garantie. L'utilisateur devra appuyer fortement sur le réservoir déformable 1 pour obtenir la distribution distincte de gouttes.

Dès que l'utilisateur a distribué le nombre de gouttes qui lui convient, il commence par relâcher sa pression d'écrasement sur le réservoir 1, de sorte que la valve 3 se referme et la paroi déformable 31 se déplace vers sa position de repos de la figure 2. Toutefois, étant donné que le réservoir 1 est sous dépression, il va engendre l'ouverture de la valve 3 dans l'autre sens, comme représenté sur la figure 4. Le produit fluide contenu dans la canule 24 est alors aspiré à l'intérieur du réservoir 1 à travers l'ouverture 33 de la valve 3. Au final, de l'air extérieur peut ou va également pénétrer à l'intérieur du réservoir à travers la canule 24 et la valve ouverte 3. On peut toutefois constater sur la figure 4 que l'ouverture 33 de la valve 3 est bien plus importante que celle de la figure 3. En effet, il n'y a rien pour limiter ou restreindre la déformation des volets 32, de sorte qu'ils peuvent s'écarter librement et ainsi définir une ouverture de passage dont la section dépend directement de la dépression qui règne à l'intérieur du réservoir 1. Le limiteur d'ouverture 27 est totalement inopérant lors de cette phase d'aspiration.

On peut ainsi relever que la valve 3 est bidirectionnelle, en ce sens qu'elle s'ouvre lors des phases de distribution et lors des phases d'aspiration, mais de manière asymétrique, étant donné que son ouverture, lors des phases de distribution, est limitée par les ailettes ou nervures 27 faisant office de limiteur d'ouverture de valve. La section de passage de l'ouverture de la valve lors des phases de distribution (figure 3), est plus petite, de l'ordre de 3 à 4 fois, que la section de passage lors des phases d'aspiration (figure 4). On peut également dire que la première section de passage de distribution est de l'ordre de 60 à 80 % plus petite que la seconde section de passage d'aspiration. Autrement dit, elle présente une section de l'ordre de 20% à 40%, et de préférence 30%, de la section dans la phase d'aspiration. Par conséquent, la perte de charge à travers la valve 3 en phase de distribution (figure 3) est sensiblement ou considérablement plus grande que la perte de charge à travers la valve 3 lors des phases d'aspiration (figure 4).

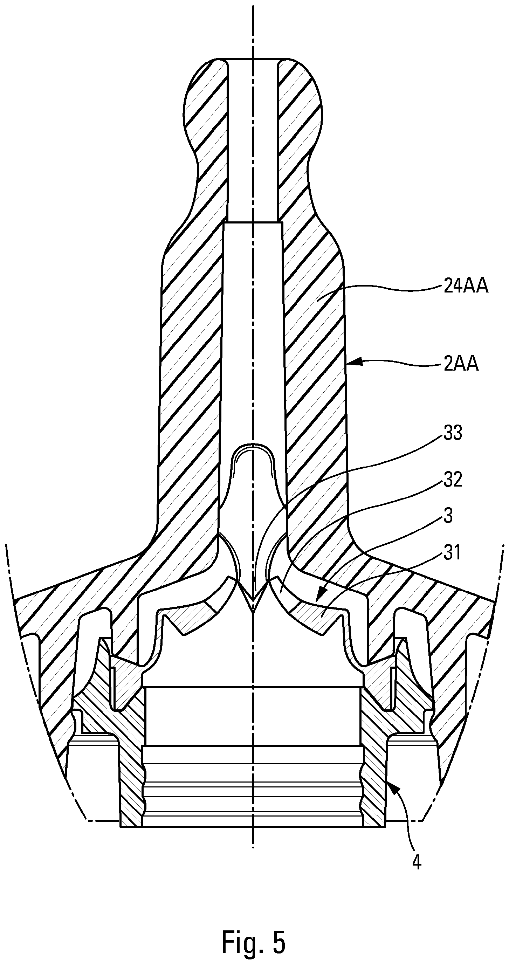

On se référera maintenant brièvement à la figure 5 qui représente le distributeur compte-gouttes du document DE202016102192U1 en phase de distribution. On y voit une tête de distribution 2AA formant une canule 24AA en-dessous de laquelle est disposée une valve 3 qui peut être en tout point identique à celle mise en œuvre dans la présente invention. La canule 24AA est dépourvue de nervures ou ailettes 27 faisant office de limiteur d'ouverture de valve, de sorte que la valve 3 peut s'ouvrir librement sans être gênée par une quelconque structure. Ainsi, les volets souples 32 peuvent s'écarter librement et former une ouverture 33 avec une section de passage importante. On peut dire que la section de passage de l'ouverture 33 est directement proportionnelle à la force d'écrasement générée par l'utilisateur sur le réservoir écrasable. Si l'utilisateur appuie fortement, une grande quantité de produit fluide va s'écouler à travers l'ouverture 33 de la valve 3 et la canule 24AA, de sorte que le produit fluide va être distribué sous la forme d'un filet continu, et non pas sous la forme de gouttes séparées distinctes. Grâce à cette figure 5, on peut directement s'apercevoir de la fonction du limiteur d'ouverture 27 de la présente invention.

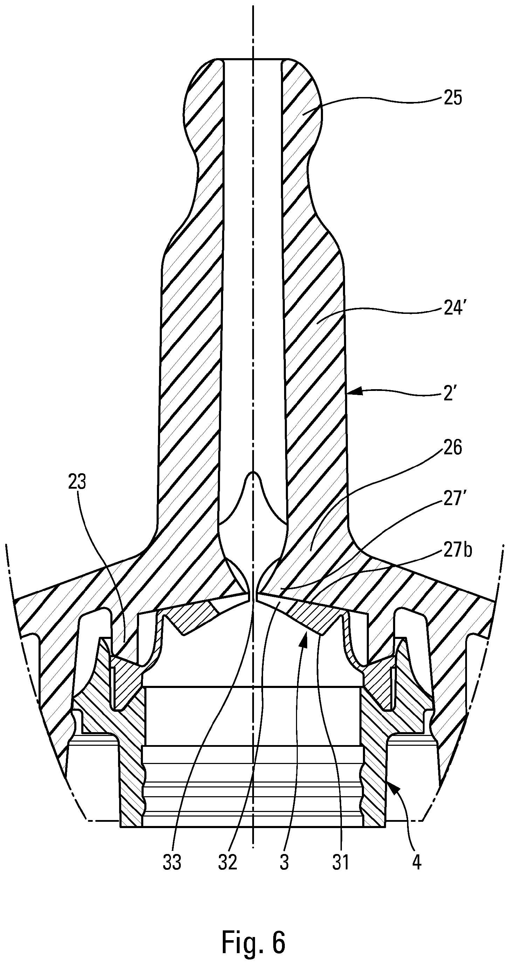

On se référera maintenant à la figure 6 pour décrire un distributeur compte-gouttes selon un deuxième mode de réalisation de l'invention. Le réservoir (non représenté), la valve 3, ainsi que la douille de support 4 peuvent être strictement identiques à ceux du premier mode de réalisation. La tête de distribution 2' diffère uniquement du premier mode de réalisation au niveau de l'entrée 26 de la canule 24' définissant le limiteur d'ouverture de valve. En effet, on peut voir que l'entrée 26 forme un goulet d'étranglement 27' qui réduit la section de passage de la canule 24'. On peut observer que le goulet d'étranglement 27' forme une section sensiblement tronconique évasée. Le goulet d'étranglement 27' forme également une zone de butée 27b contre laquelle la paroi 31 peut venir en butée étanche. En effet, la zone de butée 27b se présente sous la forme d'un toit continu, légèrement tronconique, contre lequel la partie pleine non percée de la paroi 31 peut venir en butée étanche. On évite ainsi que du produit ne se répande jusqu'au niveau de la bride annulaire de maintien 23. On peut également noter que la zone de butée 27b s'étend sur la majeure partie de l'étendue radiale des volets 32, limitant encore davantage le déplacement des volets, par rapport au premier mode de réalisation. On peut dire qu'il n'y a pratiquement pas de déformation libre des volets 32, de sorte que l'ouverture 33, de forme cruciforme, est considérablement limitée. On comprend alors aisément que la perte de charge est importante, de sorte qu'une quantité très réduite de produit fluide arrive au niveau de la sortie 25. L'utilisateur devra appuyer très fortement sur le réservoir lors des phases de distribution.

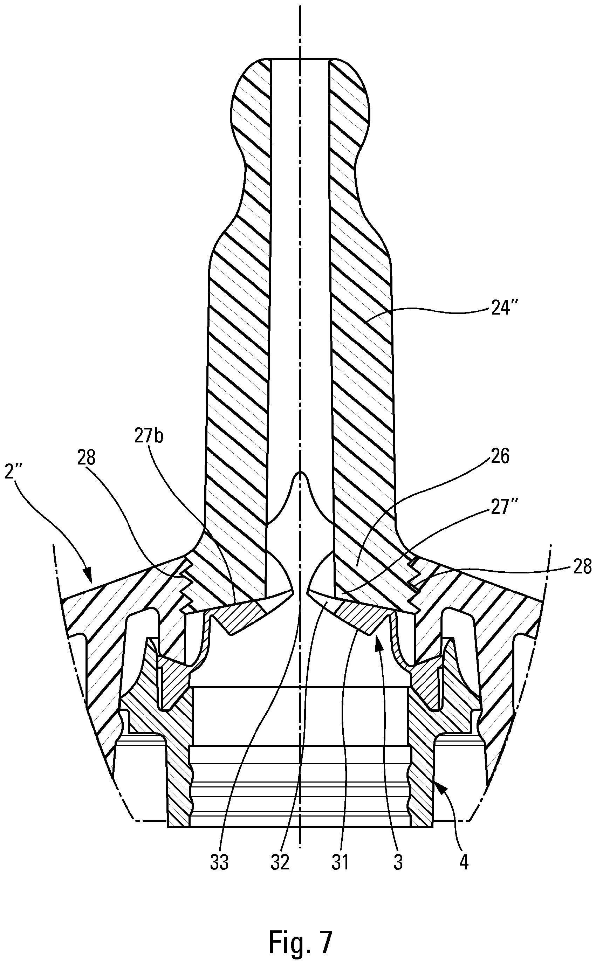

Sur la figure 7, on voit un troisième mode de réalisation de l'invention qui diffère principalement du précédent en ce que la canule 24" est déplaçable axialement par rapport à la valve 3. L'entrée 26 de la canule 24" forme un limitateur d'ouverture de course 27" définissant une zone de butée 27b contre laquelle la paroi déformable 31 vient en butée étanche lors des phases de distribution. En outre, l'entrée 26 n'est pas formée de manière monobloc avec le restant de la tête de distribution 2". En effet, elle est reliée par un filetage 28 qui permet de déplacer la canule 24" de manière axiale en éloignement ou en rapprochement de la valve 3. Un rapprochement engendre une ouverture restreinte de la valve 3, alors qu'un éloignement engendre une ouverture plus importante de la valve 3. L'utilisateur peut ainsi ajuster à sa guise la perte de charge à travers la valve 3. Une personne âgée, ou un enfant, avec une force moindre, pourra dévisser la canule 24", alors qu'une personne puissante pourra visser la canule 24" pour la rapprocher de la valve 3.

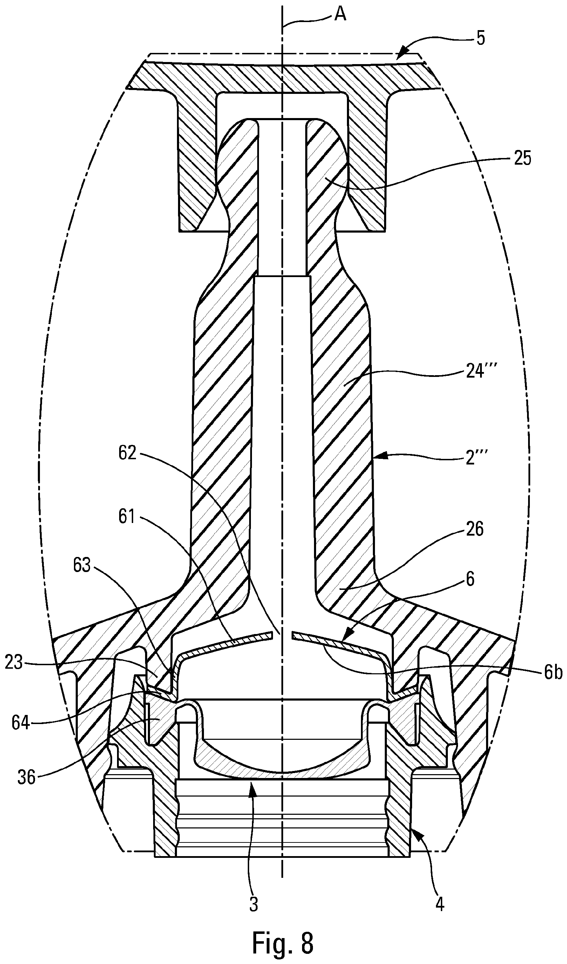

Alors que les limiteurs d'ouverture des modes de réalisation précédents étaient réalisés de manière monobloc ou intégrée à la canule, le quatrième mode de réalisation de la figure 8 met en œuvre un limiteur d'ouverture 6, qui est constitué par une pièce séparée rapportée à l'intérieur du distributeur. En effet, le limiteur 6 comprend un dôme 61 définissant une ouverture centrale réduite 62 et une zone de butée 6b. Ce dôme 61 est relié à une collerette de fixation 64 par une section de liaison 63. La collerette 64 peut être coincée entre la couronne d'ancrage 36 et la bride annulaire 23. Lorsque la valve 3 est déformée en phase de distribution, elle va venir en contact appuyé contre la zone de butée 6b du dôme 61. Ainsi, dans ce quatrième mode de réalisation, la tête de distribution 2''' comprend une canule 24'" qui peut être sensiblement identique à celle du document DE202016102192U1 précité.

On voit de voir que le limiteur d'ouverture de valve peut être formé directement par la canule ou encore par une pièce séparée rapportée. Bien que non représenté, on peut également imaginer que le limiteur d'ouverture soit directement intégré à la valve, qui définit ainsi d'elle-même deux sections de passage distinctes selon le sens d'écoulement du produit fluide. Les modes de réalisation illustrés sur les dessins ont plutôt cherché à rompre la symétrie d'écoulement d'une valve symétrique, mais la réalisation d'une valve intrinsèquement asymétrique correspond aussi à l'esprit de l'invention.

## Revendications

1. Distributeur compte-gouttes comprenant :
- un réservoir de produit fluide (1) comprenant au moins une paroi mobile (11) pour mettre le produit fluide sous pression dans le réservoir (1),
- une canule (24 ; 24' ; 24" ; 24"') ayant une entrée (26) alimenté en produit fluide et une sortie (25) conçue pour former une goutte de produit fluide,
- une valve (3) disposée entre le réservoir de produit fluide (1) et la canule (24 ; 24' ; 24" ; 24''') pour contrôler d'une part le passage de produit fluide du réservoir (1) vers la canule (24 ; 24' ; 24" ; 24''') et d'autre part le passage de produit fluide et éventuellement d'air de la canule (24 ; 24' ; 24" ; 24''') vers le réservoir (1), la valve (3) restant fermée en l'absence de pression suffisante de produit fluide, la valve (3), soumise à une pression suffisante du produit fluide en provenance du réservoir (1), définissant une ouverture (33) dont la section de passage est proportionnelle à la force exercée sur la paroi mobile (11) du réservoir (1),
**caractérisé en ce qu'**il comprend en outre un limiteur d'ouverture de valve (27 ; 27' ; 27" ; 6) pour limiter l'ouverture (33) de la valve (3) lors du passage de produit fluide du réservoir (1) vers la canule (24 ; 24' ; 24" ; 24"'), afin de créer une perte de charge supplémentaire qui réduit le passage de produit fluide à travers la canule (24 ; 24' ; 24" ; 24"').

2. Distributeur compte-gouttes selon la revendication 1, dans lequel le limiteur d'ouverture de valve (27 ; 27' ; 27" ; 6) comprend une zone de butée (27b ; 6b) contre laquelle la valve (3) vient en butée lors du passage de produit fluide du réservoir (1) vers la canule (24 ; 24' ; 24" ; 24"').

3. Distributeur compte-gouttes selon la revendication 1 ou 2, dans lequel le limiteur d'ouverture de valve (27 ; 27' ; 27" ; 6) est situé au niveau de l'entrée (26) de la canule (24 ; 24' ; 24" ; 24"').

4. Distributeur compte-gouttes selon l'une quelconque des revendications précédentes, dans lequel le limiteur d'ouverture de valve (27 ; 27' ; 27") est formé de manière monobloc avec la canule (24 ; 24' ; 24" ; 24"').

5. Distributeur compte-gouttes selon la revendication 4, dans lequel la butée de la valve (3) contre le limiteur (27' ; 27") crée un contact annulaire étanche autour de l'entrée (26) de la canule (24' ; 24").

6. Distributeur compte-gouttes selon l'une quelconque des revendications précédentes, dans lequel le limiteur d'ouverture de valve (6) est formé par une pièce distincte interposée entre la valve (3) et la canule (24"').

7. Distributeur compte-gouttes selon l'une quelconque des revendications précédentes, dans lequel le limiteur d'ouverture de valve (27' ; 27" ; 6) forme une restriction de section de passage vers la canule (24' ; 24" ; 24"').

8. Distributeur compte-gouttes selon l'une quelconque des revendications précédentes, comprenant en outre des moyens de réglage (28) pour ajuster le positionnement du limiteur d'ouverture de valve (27") par rapport à la valve (3).

9. Distributeur compte-gouttes selon l'une quelconque des revendications précédentes, dans lequel la valve (3) comprend une paroi mobile déformable (31) qui est percée par une fente cruciforme (33) définissant des volets souples adjacents (32), cette paroi mobile déformable (31) venant en butée contre le limiteur d'ouverture de valve (27 ; 27' ; 27" ; 6), au moins une partie des volets souples (32) venant avantageusement en butant contre le limiteur d'ouverture de valve (27 ; 27' ; 27" ; 6).

10. Distributeur compte-gouttes selon la revendication 9, dans lequel la valve (3) comprend en outre une couronne d'ancrage (36) montée fixement par rapport au réservoir (1) et une membrane souple annulaire (35) qui relie la couronne d'ancrage (36) à la paroi mobile déformable (31), de sorte que la paroi mobile déformable (31) se déplace par rapport à la couronne d'ancrage (36) par déformation de la membrane souple annulaire (35) sous l'effet du passage de produit fluide dans un sens ou dans l'autre.

11. Distributeur compte-gouttes selon l'une quelconque des revendications précédentes, dans lequel la valve (3) présente deux sections de passage distinctes, à savoir une première section de passage de distribution lors du passage de produit fluide du réservoir (1) vers la canule (24 ; 24' ; 24" ; 24''') et une seconde section de passage d'aspiration lors du passage de produit fluide et éventuellement d'air de la canule (24 ; 24' ; 24" ; 24''') vers le réservoir (1), la première section de passage de distribution étant limitée par le limiteur d'ouverture de valve (3) de telle sorte qu'elle est inférieure à la seconde section de passage d'aspiration.

12. Distributeur compte-gouttes selon la revendication 11, dans laquelle la première section de passage de distribution est 3 à 4 fois plus petite que la seconde section de passage d'aspiration.

## Patentansprüche

1. Tropfspender umfassend:
- einen Fluidproduktbehälter (1) umfassend mindestens eine bewegliche Wand (11), um das Fluidprodukt in dem Behälter (1) unter Druck zu setzen,
- eine Kanüle (24; 24'; 24"; 24"') mit einem Eingang (26), der mit Fluidprodukt versorgt wird, und einem Ausgang (25), der so ausgebildet ist, dass er einen Fluidprodukt-Tropfen bildet,
- ein Ventil (3), das zwischen dem Fluidproduktbehälter (1) und der Kanüle (24; 24'; 24"; 24'") angeordnet ist, um einerseits den Durchtritt von Fluidprodukt aus dem Behälter (1) zur Kanüle (24; 24'; 24"; 24''') und andererseits den Durchtritt von Fluidprodukt und eventuell Luft aus der Kanüle (24; 24'; 24"; 24'") zum Behälter (1) zu steuern, wobei das Ventil (3) bei Nichtvorhandensein von ausreichendem Fluidprodukt-Druck geschlossen bleibt, wobei das Ventil (3), wenn es einem ausreichenden Druck des Fluidprodukts aus dem Behälter (1) ausgesetzt ist, eine Öffnung (33) definiert, deren Durchgangsquerschnitt zu der Kraft proportional ist, die auf die bewegliche Wand (11) des Behälters (1) ausgeübt wird,
**dadurch gekennzeichnet, dass** er ferner einen Ventilöffnungsbegrenzer (27; 27'; 27"; 6) umfasst, um die Öffnung (33) des Ventils (3) beim Durchtritt von Fluidprodukt vom Behälter (1) zur Kanüle (24; 24'; 24"; 24'") zu begrenzen, um einen zusätzlichen Lastverlust zu erzeugen, der den Durchtritt von Fluidprodukt durch die Kanüle (24; 24'; 24"; 24'") verringert.

2. Tropfspender nach Anspruch 1, wobei der Ventilöffnungsbegrenzer (27; 27'; 27"; 6) einen Anschlagbereich (27b; 6b) umfasst, gegen den das Ventil (3) beim Durchtritt von Fluidprodukt aus dem Behälter (1) zur Kanüle (24; 24'; 24"; 24'") in Anschlag kommt.

3. Tropfspender nach Anspruch 1 oder 2, wobei sich der Ventilöffnungsbegrenzer (27; 27'; 27"; 6) am Eingang (26) der Kanüle (24; 24'; 24"; 24'") befindet.

4. Tropfspender nach einem der vorhergehenden Ansprüche, wobei der Ventilöffnungsbegrenzer (27; 27'; 27") mit der Kanüle (24; 24'; 24"; 24'") einstückig ausgebildet ist.

5. Tropfspender nach Anspruch 4, wobei der Anschlag des Ventils (3) gegen den Begrenzer (27'; 27") einen dichten Ringkontakt um den Eingang (26) der Kanüle (24'; 24") erzeugt.

6. Tropfspender nach einem der vorhergehenden Ansprüche, wobei der Ventilöffnungsbegrenzer (6) von einem gesonderten Teil gebildet ist, das zwischen dem Ventil (3) und der Kanüle (24'") eingefügt ist.

7. Tropfspender nach einem der vorhergehenden Ansprüche, wobei der Ventilöffnungsbegrenzer (27'; 27"; 6) eine Durchgangsquerschnitt-Einschränkung zur Kanüle (24'; 24"; 24'") bildet.

8. Tropfspender nach einem der vorhergehenden Ansprüche, ferner umfassend Einstellmittel (28) zur Einstellung der Positionierung des Ventilöffnungsbegrenzers (27") bezogen auf das Ventil (3).

9. Tropfspender nach einem der vorhergehenden Ansprüche, wobei das Ventil (3) eine verformbare bewegliche Wand (31) umfasst, die von einem kreuzförmigen Schlitz (33) durchdrungen ist, die benachbarte nachgiebige Klappen (32) definiert, wobei diese verformbare bewegliche Wand (31) gegen den Ventilöffnungsbegrenzer (27; 27'; 27"; 6) in Anschlag kommt, wobei vorteilhafterweise zumindest ein Abschnitt der nachgiebigen Klappen (32) gegen den Ventilöffnungsbegrenzer (27; 27'; 27"; 6) in Anschlag kommt.

10. Tropfspender nach Anspruch 9, wobei das Ventil (3) ferner eine Verankerungskrone (36) umfasst, die bezogen auf den Behälter (1) fest angebracht ist, und eine ringförmige nachgiebige Membran (35), die die Verankerungskrone (36) mit der verformbaren beweglichen Wand (31) verbindet, so dass sich die verformbare bewegliche Wand (31) bezogen auf die Verankerungskrone (36) durch Verformung der ringförmigen nachgiebigen Membran (35) unter der Wirkung des Durchtritts von Fluidprodukt in eine Richtung oder die andere bewegt.

11. Tropfspender nach einem der vorhergehenden Ansprüche, wobei das Ventil (3) zwei gesonderte Durchgangsquerschnitte aufweist, nämlich einen ersten Abgabe-Durchgangsquerschnitt beim Durchtritt von Fluidprodukt aus dem Behälter (1) zur Kanüle (24; 24'; 24"; 24"') und einen zweiten Ansaug-Durchgangsquerschnitt beim Durchtritt von Fluidprodukt und eventuell Luft aus der Kanüle (24; 24'; 24"; 24"') zum Behälter (1), wobei der erste Abgabe-Durchgangsquerschnitt so vom Ventilöffnungsbegrenzer (3) begrenzt wird, dass er kleiner als der zweite Ansaug-Durchgangsquerschnitt ist.

12. Tropfspender nach Anspruch 11, wobei der erste Abgabe-Durchgangsquerschnitt 3 bis 4 Mal kleiner als der zweite Ansaug-Durchgangsquerschnitt ist.

## Claims

1. A dropper dispenser comprising:
▪ a fluid reservoir (1) including at least one movable wall (11) so as to put the fluid in the reservoir (1) under pressure,
▪ a cannula (24; 24'; 24"; 24''') having an inlet (26) that is fed with fluid and an outlet (25) that is designed to form a drop of fluid,
▪ a valve (3) that is arranged between the fluid reservoir (1) and the cannula (24; 24'; 24"; 24''') so as to control firstly the flow of fluid from the reservoir (1) into the cannula (24; 24'; 24"; 24''') and secondly the flow of fluid and possibly air from the cannula (24; 24'; 24"; 24''') into the reservoir (1), the valve (3) remaining closed in the absence of sufficient fluid pressure, the valve (3), when subjected to sufficient pressure from the fluid in the reservoir (1), defining an opening (33) having a flow section that is proportional to the force exerted on the movable wall (11) of the reservoir (1),
the dropper dispenser being **characterized in that** it further comprises a valve-opening limiter (27; 27'; 27"; 6) so as to limit the opening (33) of the valve (3) while fluid is flowing from the reservoir (1) into the cannula (24; 24'; 24"; 24"'), so as to create additional head loss that reduces the flow of fluid through the cannula (24; 24'; 24"; 24"').

2. A dropper dispenser according to claim 1, wherein the valve-opening limiter (27; 27'; 27"; 6) includes an abutment zone (27b; 6b) against which the valve (3) comes into abutment while fluid is flowing from the reservoir (1) into the cannula (24; 24'; 24"; 24"').

3. A dropper dispenser according to claim 1 or claim 2, wherein the valve-opening limiter (27; 27'; 27"; 6) is situated at the inlet (26) of the cannula (24; 24'; 24"; 24"').

4. A dropper dispenser according to any preceding claim, wherein the valve-opening limiter (27; 27'; 27") is formed integrally with the cannula (24; 24'; 24"; 24"').

5. A dropper dispenser according to claim 4, wherein the abutment of the valve (3) against the limiter (27'; 27") creates leaktight annular contact around the inlet (26) of the cannula (24'; 24").

6. A dropper dispenser according to any preceding claim, wherein the valve-opening limiter (6) is formed by a separate part that is interposed between the valve (3) and the cannula (24"').

7. A dropper dispenser according to any preceding claim, wherein the valve-opening limiter (27'; 27"; 6) forms a flow-section constriction towards the cannula (24'; 24"; 24"').

8. A dropper dispenser according to any preceding claim, further comprising adjustment means (28) for adjusting the position of the valve-opening limiter (27") relative to the valve (3).

9. A dropper dispenser according to any preceding claim, wherein the valve (3) comprises a deformable movable wall (31) that is pierced by a cross-shaped slot (33) that defines adjacent flexible flaps (32), the deformable movable wall (31) coming into abutment against the valve-opening limiter (27; 27'; 27"; 6), at least one portion of the flexible flaps (32) advantageously coming into abutment against the valve-opening limiter (27; 27'; 27"; 6).

10. A dropper dispenser according to claim 9, wherein the valve (3) further comprises an anchor collar (36) that is mounted in stationary manner relative to the reservoir (1) and an annular flexible membrane (35) that connects the anchor collar (36) to the deformable movable wall (31), such that the deformable movable wall (31) is moved relative to the anchor collar (36) by deforming the annular flexible membrane (35) under the effect of the flow of fluid in one direction or in the other.

11. A dropper dispenser according to any preceding claim, wherein the valve (3) presents two distinct flow sections, namely a first flow section for dispensing while fluid is flowing from the reservoir (1) into the cannula (24; 24'; 24"; 24''') and a second flow section for suction while fluid and possibly air is/are flowing from the cannula (24; 24'; 24"; 24''') into the reservoir (1), the first flow section for dispensing being limited by the valve-opening limiter (3) such that it is less than the second flow section for suction.

12. A dropper dispenser according to claim 11, wherein the first flow section for dispensing is three to four times smaller than the second flow section for suction.
